# EUROPÄISCHE PATENTANMELDUNG

(11) **EP 2 014 584 A1**
(43) Veröffentlichungstag der Anmeldung: **14.01.2009**
(21) Anmeldenummer: 08450103.0
(22) Anmeldetag: 08.07.2008
(51) Int. Cl.: B65F 3/00

(54) **Müllfahrzeug zur Abfuhr geheim zu haltender Papiere**

(30) Priorität: 09.07.2007 AT 10552007
(71) Anmelder: Artmann, Harald, 7203 Wiesen (AT)
(72) Erfinder: Artmann, Harald, 7203 Wiesen (AT)
(74) Vertreter: Rippel, Andreas

(57) **Zusammenfassung**

Bei einem Müllfahrzeug zur Abfuhr geheim zu haltender Dokumente, mit einem Schüttraum (5), der von einer Schüttung (3) mit den zu entsorgenden Dokumenten beschickt wird, , ist die Schüttung (3) durch eine sperrbare Türe (1) abschließbar und der Schüttraum (5) ist von der Schüttung (3) durch eine verschließbare Tür (2) getrennt, die bei abgesperrter Türe (1) zur Schüttung (3) und in Abhängigkeit von der Stellung der Schüttung (3) knapp vor der Beschickung öffenbar ist.

Dadurch ist eine Entwendung der geheim zu haltenden Dokumente aus dem Schüttraum nicht möglich.

## Beschreibung

Die Erfindung bezieht sich auf ein Müllfahrzeug zur Abfuhr geheim zu haltender Dokumente, mit einem Schüttraum, der von einer Schüttung mit den zu entsorgenden Dokumenten beschickt wird.

In verschiedenen Bereichen der Verwaltung und der Wirtschaft ist es erforderlich, Dokumente bzw. allgemein Papiere geheim zu halten. Für die Entsorgung solcher Dokumente bzw. Papiere ist es bekannt, eigene Müllbehälter zu verwenden, die in speziell ausgebildeten Müllfahrzeugen entleert werden, von wo sie dann endgültig entsorgt werden.

Diese für die geheim zu haltenden Dokumente bzw. Papiere bestimmten Behälter besitzen sperrbare Deckel, die erst bei der Entleerung in den Schüttraum des Müllfahrzeuges entsperrt werden. Bei den bekannten Müllfahrzeugen ist jedoch der Zugang zum Schüttraum, wenn auch nur für kurze Zeit, möglich. Es könnten daher Teile dieser geheim zu haltenden Dokumente bzw. Papiere in der kurzen Zeit knapp nach dem Entleeren des Müllbehälters entwendet werden.

Die Erfindung hat es sich zum Ziel gesetzt, einen Müllwagen zu schaffen, bei dem eine Entwendung der geheim Zu haltenden Dokumente oder Papiere aus dem Schüttraum nicht möglich ist.

Erreicht wird dieses Ziel dadurch, dass die Schüttung durch eine sperrbare Türe abschließbar ist und dass der Schüttraum von der Schüttung durch eine verschließbare Tür getrennt ist, die bei abgesperrter Türe zur Schüttung und in Abhängigkeit von der Stellung der Schüttung knapp vor der Beschickung öffenbar ist.

Bei einem erfindungsgemäßen Müllwagen ist ein unbefugter Zugang zum Schüttraum daher praktisch nicht möglich.

Für das Sperren der Türe können im Rahmen der Erfindung verschiedene Systeme bzw. Vorrichtungen verwendet werden. Bei einer möglichen Ausführungsform ist für die Schließung der Türe ein elektromechanisches oder elektrisches Schloss angeordnet, das beim Hochfahren der Schüttung knapp vor der Beschickung geöffnet wird.

Zweckmäßig ist die Türe als oben angelenkte Klappe ausgebildet. Die Betätigung einer solchen Klappe ist einfacher als die Betätigung eines seitlich angelenkten Türflügels.

Die Betätigung wird weiter vereinfacht, wenn die Klappe durch Anstoßen des Müllbehälters offenbar ist.

Bei einer bevorzugten mechanisch betätigten Ausführungsform ist die Schüttung mit einem drehbar gelagerten Haken od. dgl. versehen, der die Tür bzw. Klappe verschließt und bei einer Stellung der Schüttung knapp vor der Beschickung aus der Schließstellung verdrehbar ist.

Nachstehend ist die Erfindung anhand von in den Zeichnungen dargestellten Ausführungsbeispielen näher beschrieben, ohne auf diese Beispiele beschränkt zu sein. Dabei zeigen die Fig. 1 bis Fig. 4 den Bewegungsablauf beim Beschicken des Schüttraumes eines Müllfahrzeuges und die Fig. 5 und 6 stellen schematisch eine mechanisch wirkende Verriegelung dar.

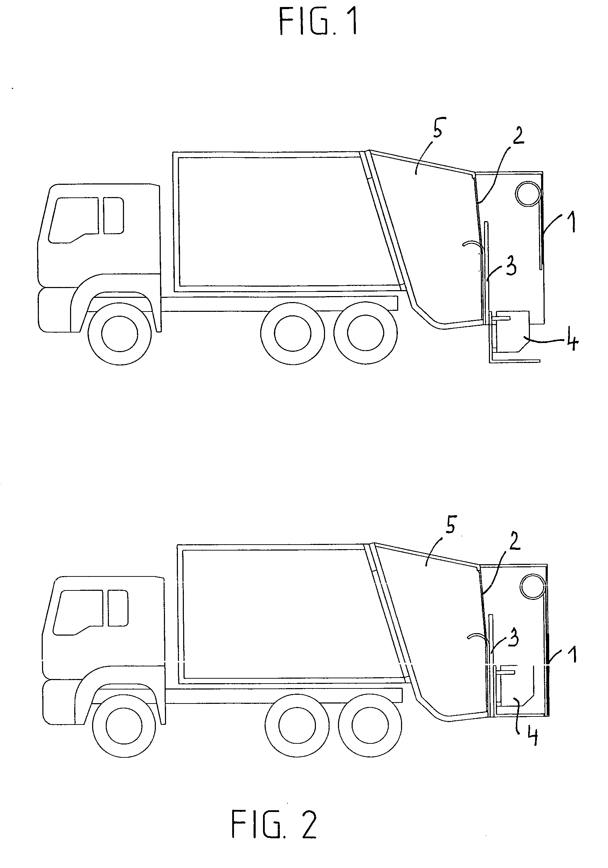

In den Fig. 1 bis 4 ist mit 1 eine Sicherheitstüre bezeichnet, welche die Schüttung abschließt. Die Schüttung 3 ist zur Aufnahme eines Müllbehälters 4 ausgebildet. Dieser Müllbehälter 4 wird mittels der Schüttung 3 in den Schüttraum 5 entleert. Der Schüttraum 5 ist durch eine Klappe 2 abgeschlossen.

Gemäß Fig. 1 ist die Sicherheitstüre 1 offen und die Schüttung 3 hat den Müllbehälter 4 aufgenommen.

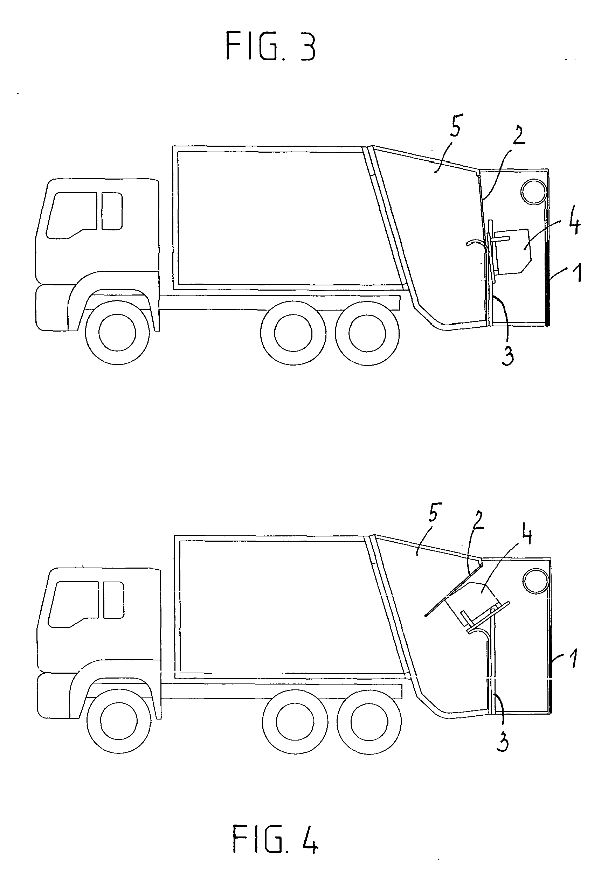

In Fig. 2 ist schematisch dargestellt, dass bei geschlossener Sicherheitstüre 1 und geschlossener Klappe 2 die Schüttung 3 den Müllbehälter 4 hochfährt.
Gemäß Fig. 3 hat die Schüttung 3 mit dem Behälter 4 einen Schalter (nicht dargestellt) erreicht, der die Entriegelung der Klappe 2 bewirkt.

Die Verriegelung der Klappe 2 könnte ein elektrisch zu betätigendes Schloß sein, das z. B. bei Tresoren verwendet wird.

Nach Fig. 4 hat der Müllbehälter 4 die Klappe 2 aufgestoßen und der Inhalt des Müllbehälters 4 wird in den Schüttraum 5 entleert.
Nach der Entleerung wird der Müllbehälter 4 wieder nach unten gefahren, die Klappe 2 schließt sich und wird verriegelt.

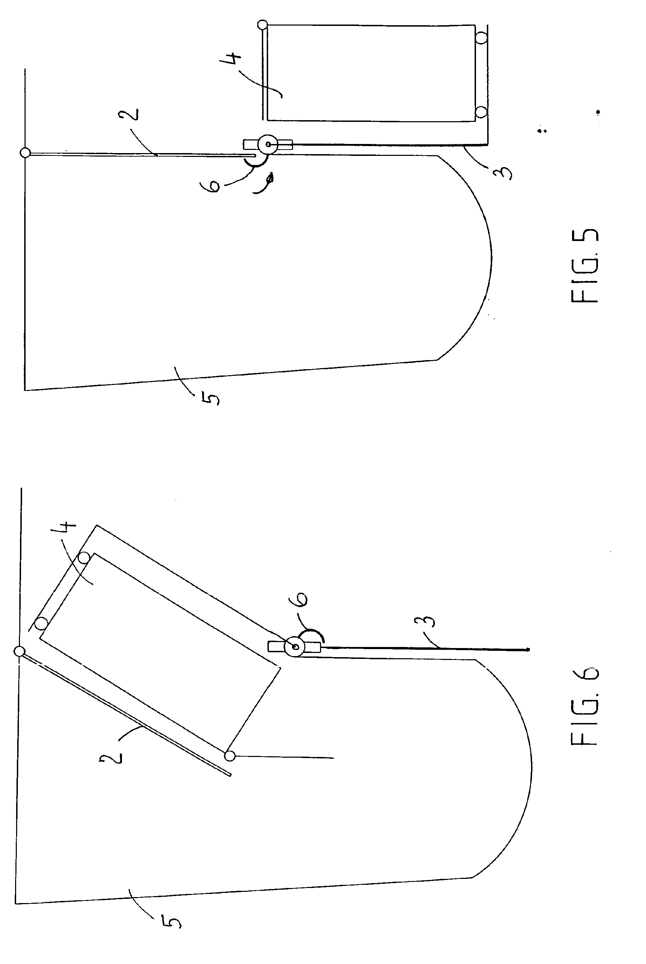

Gemäß den Fig. 5 und 6 ist an der Schüttung ein Haken 6 derart gelagert, dass er bei der Schwenkbewegung der Schüttung 3 mitverschwenkt wird. In der Stellung nach Fig. 5 verriegelt dieser Haken 6 die Klappe 2. Beim Verschwenken des Müllbehälters 4 durch die Schüttung 3 dreht auch der Haken 6 mit und die Klappe 2 wird derart entriegelt.

Im Rahmen der Erfindung sind zahlreiche Abänderungen möglich. Wie bereits ausgeführt, kann insbesondere die Art bzw. Ausbildung der Verriegelung der Klappe 2 vielfach variiert werden.

## Patentansprüche

1. Müllfahrzeug zur Abfuhr geheim zu haltender Dokumente, mit einem Schüttraum (5), der von einer Schüttung (3) mit den zu entsorgenden Dokumenten beschickt wird, **dadurch gekennzeichnet, dass** die Schüttung (3) durch eine sperrbare Türe (1) abschließbar ist und dass der Schüttraum (5) von der Schüttung (3) durch eine verschließbare Tür (2) getrennt ist, die bei abgesperrter Türe (1) zur Schüttung (3) und in Abhängigkeit von der Stellung der Schüttung (3) knapp vor der Beschickung öffenbar ist.

2. Müllfahrzeug nach Anspruch 1, **dadurch gekennzeichnet, dass** für die Schließung der Türe (2) vom Schüttraum (5) zur Schüttung (3) ein elektromechanisches oder elektrisches Schloss angeordnet ist, das beim Hochfahren der Schüttung (3) knapp vor der Beschickung geöffnet wird.

3. Müllfahrzeug nach Anspruch 1 oder 2, **dadurch gekennzeichnet, dass** die Türe als oben angelenkte Klappe (2) ausgebildet ist.

4. Müllfahrzeug nach Anspruch 3, **dadurch gekennzeichnet, dass** die Klappe (2) durch Anstoßen des Müllbehälters (4) öffenbar ist.

5. Müllfahrzeug nach einem der Ansprüche 1, 3 oder 4, **dadurch gekennzeichnet, dass** die Schüttung (3) mit einem drehbar gelagerten Haken (6) od. dgl. verstehen ist der die Tür bzw. Klappe (2) verschließt und bei einer Stellung der Schüttung (3) knapp vor der Beschickung aus der Schließstellung verdrehbar ist.
